# EUROPÄISCHE PATENTANMELDUNG

(11) **EP 1 804 354 A2**
(43) Veröffentlichungstag der Anmeldung: **04.07.2007**
(21) Anmeldenummer: 06126517.9
(22) Anmeldetag: 19.12.2006
(51) Int. Cl.: H02G 3/30, F16B 7/04, F16L 3/26

(54) **Adapter zum Anschließen eines Auslegers zur Auflage von Kabelrinnen oder Kabelleitern an ein Trageprofil**

(30) Priorität: 28.12.2005 DE 202005020320 U
(71) Anmelder: OBO Bettermann GmbH & Co. KG, 58710 Menden (DE)
(72) Erfinder: Schmidt, Michael, 58730 Fröndenberg/Ruhr (DE)
(74) Vertreter: Haverkamp, Jens

(57) **Zusammenfassung**

Ein Adapter 3 dient zum Anschließen eines Auslegers 1 zur Auflage von Kabelrinnen oder Kabelleitern an ein Trageprofil 2. Das Trageprofil 2 weist in regelmäßigen Abständen Langlöcher L und der Ausleger 1 stirnseitig an seiner zu dem Trageprofil 2 weisenden Seite eine Stirnplatte 4 mit einer Durchbrechung auf. Der Adapter 3 verfügt über eine an dem Trageprofil 2 mittels zumindest einem Hakenelement 6 einhakbare Platte 5. Der Platte 5 des Adapters 3 ist ein von seiner zum Trageprofil 2 wegweisenden Seite ausgestelltes Hakenelement 7 zugeordnet, das zum Anschließen des Auslegers 1 an den Adapter 3 in die Durchbrechung der Stirnplatte 4 des Auslegers 1 eingreift.

Eine Teilezusammenstellung zum Ausbilden einer Trageeinrichtung für Kabelrinnen oder Kabelleiter umfasst mehrere Adapter, wie diese vorstehend beschrieben sind. Zusätzlich umfasst die Teilezusammenstellung mehrere Trageprofile der vorgenannten Art sowie mehrere Ausleger. Die Ausleger weisen eine unterschiedliche Materialstärke ihrer Stirnplatten auf. Die Adapter verfügen über an die unterschiedliche Dicke der Stirnplatten der Ausleger angepasste Hakenelemente oder die Adapter sind ausgebildet, um ein lösbares Hakenelement aufzunehmen. Dann verfügt die Teilezusammenstellung über Hakenelemente mit unterschiedlicher Verkröpfungsweite.

## Beschreibung

Die Erfindung betrifft einen Adapter zum Anschließen eines Auslegers zur Auflage von Kabelrinnen oder Kabelleitern an ein Trageprofil, welches Trageprofil in regelmäßigen Abständen Langlöcher und der Ausleger stirnseitig an seiner zu dem Trageprofil weisenden Seite eine Stirnplatte mit einer Durchbrechung aufweist, welcher Adapter über eine an dem Trageprofil mittels zumindest einem Hakenelement einhakbare Platte verfügt.

Derartige Adapter sind Teile von Kabeltragsystemen, die der weitgespannten Kabelverlegung, oftmals abgehängt von Decken, dienen. Im Hinblick auf die Vielfalt der miteinander zu verbindenden und zu montierenden Einzelelemente besteht grundsätzlich die Anforderung einer einfachen Montage mit unterschiedlich einsetzbaren Elementen. Eines der wichtigen Konstruktionselemente eines solchen Kabeltragsystems ist die Anbringung und die Ausführung der entsprechenden Ausleger für die Auflage der Kabelrinnen oder -leiter. Vorzugsweise werden diese Ausleger an deckenabgehängten Stielprofilen eingerichtet. Gleichermaßen werden diese Auflager auch an anderen Elementen, beispielsweise an einer Wand, festgesetzt.

Bei den als Trageprofil dienenden Stielprofilen handelt es sich typischerweise um Profile mit einem U-förmigen Querschnitt oder um kastenförmige Hohlprofile. An den Schenkeln eines solchen Trageprofiles sind mit regelmäßigen Abstanden zueinander Langlöcher eingebracht. Diese dienen zum Anschließen der Ausleger. Die Ausleger selbst weisen typischerweise ebenfalls eine profilierte Querschnittsfläche auf, beispielsweise nach Art eines L- oder U-Profils. An der zu dem Trageprofil weisenden Seite verfügen die Ausleger über eine Stirnplatte. Die Stirnplatte weist eine oder mehrere Durchbrechungen auf. Diese können als Langloch ausgebildet sein. Zum Anschließen eines solchen Auslegers an das Trageprofil werden Schrauben eingesetzt, die in der gewünschten Höhe des anzubringenden Auslegers mit ihrem Schraubenschaft ein Langloch des Trageprofils und eine Durchbrechung der Stirnplatte des Auslegers durchgreifen. Eine Spannmutter dient zum Verschrauben dieser beiden Elemente miteinander. Die Ausbildung eines solchen Auslegers erlaubt es, den Ausleger sowohl an ein Trageprofil anzuschließen als auch unmittelbar an einen Befestigungsgrund, beispielsweise einer Wand anzuschrauben. Letzteres ist bei solchen Auslegern nicht möglich, die ihrerseits ein oder mehrere Hakenelemente tragen, mit denen ein solcher Ausleger an einem Trageprofil einhakbar ist.

Aus DE 83 00 065 U1 ist ein Drehstück für einen Kabelhalter bekannt. Bei diesem Drehstück handelt es sich um ein Zwischenstück, mit dem ein Hakenelemente aufweisender Ausleger an ein Trageprofil angeschlossen werden kann. Das Zwischenstück verfügt über ein Drehlager, so dass der daran eingehakte Ausleger um die Drehachse des Zwischenstückes verdrehbar ist.

Ausgehend von dem diskutierten Stand der Technik liegt der Erfindung daher die Aufgabe zugrunde, einen Adapter vorzuschlagen, der eine einfache und montagefreundliche Befestigung eines eingangs genannten Auslegers an einem entsprechenden Trageprofil gestattet und durch den die Vielseitigkeit des Einsatzes des Auslegers nicht beeinträchtigt ist.

Gelöst wird diese Aufgabe erfindungsgemäß durch einen eingangs genannten Adapter, bei dem die Platte des Adapters ein von seiner zum Trageprofil wegweisenden Seite ausgestelltes Hakenelement zugeordnet ist, das zum Anschließen des Auslegers an den Adapter in die Durchbrechung der Stirnplatte des Auslegers eingreift.

Mit einem solchen Adapter lassen sich die bekannten Ausleger spezieller Art in einfacher Weise werkzeuglos mit einer Einhakbefestigung am Trageprofil anbringen. Somit können weiterhin diejenigen Ausleger eingesetzt werden, die sich auch zur Wandbefestigung eignen. Im Unterschied zu der vorbekannten Möglichkeit, universell einsetzbare Ausleger mittels Schrauben an dem Trageprofil zu befestigen, gestattet es dieser Adapter, dass die bisher lediglich mittels Schrauben an ein Trageprofil anschließbaren Ausleger nunmehr auch werkzeuglos den an sich bekannten Trageprofilen montagefreundlich angebracht werden können. Man benötigt daher eine geringere Lagerhaltung an Auslegern, die gleichzeitig auch für eine Wandbefestigung geeignet sind.

Der Adapter verfügt zweckmäßigerweise über eine an der Außenseite des Trageprofils im montierten Zustand anliegende Platte, deren Hakenelemente durch aus der Ebene der Platte verkröpft ausgestellte Ausklinkungen gebildet sind. Die auf diese Weise gebildeten Hakenelemente verfügen aufgrund ihrer laschenartigen Konzeption über eine gewisse Quererstreckung, was ein verdrehsicheres Anschließen des Adapters an das Trageprofil sowie ein ebenfalls verdrehsichereres Anschließen des Auslegers an den Adapter unterstützt. Zweckmäßigerweise entspricht die Breite eines Hakenelementes der Breite eines Langloches des Trageprofils bzw. einer Durchbrechung der Stirnplatte des Auslegers. Für den Fall, dass im Rahmen einer Kabeltragevorrichtung Ausleger mit einer unterschiedlich dicken Stirnplatte an einen solchen Adapter angeschlossen werden sollen, ist in einem Ausführungsbeispiel vorgesehen, das oder die zum Anschließen des Auslegers eingesetzten Hakenelemente lösbar gegenüber der Platte des Adapters zu konzipieren. Bei diesen Hakenelementen handelt es sich sodann um Z-förmig verkröpfte Laschen. Zum Halten eines solchen Hakenelementes verfügt die Platte des Adapters über eine typischerweise als Einprägung ausgebildete, oberseitig offene Tasche. In Abhängigkeit von der Materialstärke der Stirnplatte des Auslegers weisen diese Hakenelemente eine unterschiedliche Verkröpfungsweite auf. Bei Verwendung eines solchen Adapters wird man dann dasjenige Hakenelement in die Tasche des Adapters einsetzen, dessen Verkröpfungsweite der Materialstärke der Stirnplatte entspricht. Hierdurch wird erreicht, dass die Stirnplatte flächig und spielfrei an der Platte des Adapters anliegt, was wiederum zur Unterstützung der Verdrehsicherheit beiträgt.

Die aneinander liegenden Elemente - Platte des Adapters und Trageprofil einerseits sowie Stirnplatte und Platte des Adapters andererseits - können unter eine gewisse Vorspannung gestellt werden, wenn die durch die Hakenelemente gebildete Öffnung sich zur Verkröpfung hin geringfügig verjüngt. Somit sind bei diesen Hakenelementen die Ebene der zum Hintergreifen dienenden Abschnitte gegenüber der Plattenebene geringfügig nach außen schräg gestellt.

Zur weiteren Verdrehsicherung des Adapters gegenüber dem Trageprofil bietet es sich an, einen Anlageschenkel an der Platte des Adapters anzuformen, der bei montiertem Adapter an einer Seitenfläche des Trageprofils anliegt. Gleichermaßen kann vorgesehen sein, dass die Platte einen angeformten Anlageschenkel aufweist, der an einer Seitenfläche des Auslegers anliegt. Typischerweise wird man die Adapter vorsehen, damit diese die beiden vorbeschriebenen Anlageschenkel aufweisen. Ein solcher Adapter ist daher im Querschnitt Z-förmig ausgebildet. Nach der Montage des Adapters an dem Trageprofil und des Auslegers an dem Adapter umgreifen die Anlageschenkel seitlich das jeweils daran angeschlossene Element. Auf diese Weise ist eine wirksame Verdrehsicherung zwischen dem Ausleger und dem Trageprofil erstellt.

Aufgrund der Variabilität in der Erstellung von solchen Kabeltragesystemen ist ebenfalls eine Teilezusammenstellung nach Art eines Baukastens beansprucht, die zum Ausbilden einer solchen Trageeinrichtung für Kabelrinnen oder Kabelleiter dient. Eine solche Teilezusammenstellung umfasst Ausleger mit einer unterschiedlichen Materialstärke ihrer Stirnplatten. Typischerweise weisen Ausleger mit einer größeren Länge eine stärkere Stirnplatte, verglichen mit Auslegern mit einer geringeren Erstreckung. Bei den Auslegern mit längerer Erstreckung wird eine Stirnplatte mit größerer Materialstärke benötigt, um die Kräfte in das Trageprofil einleiten zu können. Teil einer solchen Teilezusammenstellung sind ebenfalls Adapter, wie diese grundsätzlich vorbeschrieben sind. Damit an Ausleger mit bezüglich ihrer Materialstärke unterschiedlichen Stirnplatten spielfrei an einen Adapter angeschlossen werden können, umfasst die Teilezusammenstellung solche Adapter, bei denen das oder die zum Anschließen des Auslegers dienenden Hakenelemente eine Verkröpfungsweite aufweisen, die jeweils an die Materialstärke der Stirnplatte des Auslegers angepasst ist. Gemäß einer weiteren Ausgestaltung werden bei einer solchen Teilezusammenstellung an Stelle der vorgenannten Adapter oder auch zusätzlich zu den vorgenannten Adaptern solche Adapter eingesetzt, bei denen das oder die zum Anschließen der Ausleger dienenden Hakenelemente gegenüber dem Adapter selbst lösbar sind. Bei einer solchen Ausgestaltung sind einheitliche Adapter vorgesehen, in die dann in Abhängigkeit von der Materialstärke der Stirnplatte des anzuschließenden Auslegers das jeweils entsprechende Hakenelement in die dafür vorgesehene Tasche des Adapters eingesetzt wird.

Nachfolgend ist die Erfindung anhand von Ausführungsbeispielen unter Bezugnahme auf die beigefügten Figuren beschrieben. Es zeigen:
- **Fig. 1:**: die Montageanordnung eines als Stielprofil ausgebildeten Trageprofils, eines Adapters und eines Auslegers in einer Explosionsdarstellung,
- **Fig. 2:**: einen Längsschnitt durch die Montagesituation des am Stielprofil montierten Auslegers,
- **Fig. 3:**: einen Schnitt nach der Linie I-I der Figur 1 durch den Adapter und
- **Fig. 4a, 4b:**: eine vergrößerte Schnittdarstellung durch einen weiteren Adapter zum Anschließen eines Auslegers an ein Trageprofil, welcher Adapter ein lösbares Hakenelement zum Anschließen des Auslegers aufweist mit abgenommenen Hakenelement (Figur 4a) und mit eingesetztem Hakenelement (Figur 4b).

Zum Anschließen eines Auslegers 1 zum Halten von Kabelrinnen oder Kabelleitungen im Rahmen eines Kabeltragsystems an ein deckenseitig abgehängtes, als Stielprofil ausgebildetes Trageprofil 2 dient ein Adapter 3. Der Ausleger 1 wird somit unter Zwischenschaltung des Adapters 3 an das Trageprofil 2 angeschlossen.

Das Trageprofil 2, welches in den Figuren lediglich in einem Ausschnitt dargestellt ist, ist als U-förmiges Stielprofil konzipiert. In die einzelnen Schenkel S₁, S₂, S₃ des Trageprofils 2 sind mit regelmäßigen Abständen zueinander Langlöcher L eingebracht. Das Trageprofil 2 ist bei dem dargestellten Ausführungsbeispiel in nicht dargestellter Art und Weise deckenseitig abgehängt. Seine Längserstreckung ist vertikal ausgerichtet. Die Ausrichtung der in die Schenkel S₁ - S₃ eingebrachten Langlöcher L verläuft parallel zur Längserstreckung des Trageprofils 2. Der Ausleger 1 ist in den Figuren ebenfalls nur in einem Ausschnitt dargestellt, und zwar mit seinem zu dem Trageprofil 2 weisenden Endabschnitt. Der Ausleger 1 ist profiliert, um die gewünschte Steifigkeit zu erzielen. An der zu dem Trageprofil 2 weisenden Seite verfügt der Ausleger 1 über eine Stirnplatte 4, die bei dem dargestellten Ausführungsbeispiel ebenfalls eine langlochartige Durchbrechung, konzipiert entsprechend den Langlöchern L des Trageprofils 2, aufweist. Somit handelt es sich bei dem Ausleger 1 um einen herkömmlichen Ausleger. Gleiches gilt für das Trageprofil 2. Infolge des Vorhandenseins der in der Stirnplatte 4 vorhandenen Durchbrechung kann der Ausleger 1 ohne weiteres auch mittels Schrauben an einem anderen Befestigungsgrund als dem Trageprofil 2, beispielsweise einer Wand, einer Strebe oder dergleichen montiert werden.

Der Adapter 3 umfasst eine Platte 5, die sich parallel zu dem einen Schenkel S₁ des Trageprofils 2 und parallel zur Stirnplatte 4 des Auslegers 1 erstreckt. Die Platte 5 weist an ihrer zu dem Trageprofil 2 weisenden Seite über ein erstes, durch eine Ausklinkung gebildetes Hakenelement 6 auf. Das Hakenelement 6 dient zum Einhaken des Adapters 3 an dem Trageprofil 2. Die Breite des durch die Ausklinkung gebildeten Hakelementes 6 entspricht im Wesentlichen der lichten Weite eines Langloches L. Das Hakenelement 6 ist nach unten hin geöffnet, so dass nach Einhaken des Adapters 3 an dem Trageprofil 2 das über den Adapter 3 in das Trageprofil 2 einzuleitende Gewicht die Hakenverbindung gesichert wird. Die Platte 5 trägt ein weiteres, als Ausklinkung gebildetes Hakenelement 7, welches in die von dem Trageprofil 2 wegweisende Richtung ausgestellt ist. Das Hakenelement 7 ist nach oben hin offen und dient zum Einhaken des Auslegers 1. Der Abstand der zur Ebene der Platte 5 weisenden Seite des Schenkels 8 des Hakenelementes 7 zu der Platte bestimmt die Verkröpfungsweite des Hakenelementes 7. Diese ist gebildet durch den den Schenkel 8 mit der Platte 5 verbindenden Steg 9. Die Länge des Steges 9 entspricht der Materialstärke der Stirnplatte 4 des Auslegers 1. Die Breite des Schenkels 8 des Hakenelementes 7 entspricht im Wesentlichen der Breite des Langloches der Stirnplatte 4. Der Ausleger 1 kann somit über die in seiner Stirnplatte 4 enthaltene Durchbrechung auf das Hakenelement 7 aufgeschoben und daran eingehakt werden.

Das Hakenelement 7 ist in vertikaler Richtung von dem Hakenelement 6 beabstandet, wobei das Hakenelement 6 zuoberst liegt. Diese Anordnung wirkt sich günstig auf eine Krafteinleitung in das Trageprofil 2 aus.

An den beiden Längsseiten der Platte 5 ist jeweils ein Anlageschenkel 10 bzw. 11 angeformt. Die Anlageschenkel 10, 11 sind in entgegen gesetzte Richtungen weisend vorgesehen. Der Anlageschenkel 10 dient zum Umgreifen des Trageprofils 2, damit dessen Innenseite an der Außenseite des Schenkels S₂ des Trageprofils 2 anliegt, wenn der Adapter 3 an dem Trageprofil 2 eingehakt ist. Gleichzeitig dient der Anlageschenkel 8 als Lehre im Sinne einer Montagehilfe, durch den das Auffinden eines Langloches 11 zum Einführen des Hakenelementes 6 erleichtert ist. Liegt der Anlageschenkel 10 auf der Außenseite des Schenkels S₂ des Trageprofils 2 an, befindet sich das Hakenelement 6 in der Flucht der Langlöcher L des Schenkels S₁ des Trageprofils 2. Demselben Zweck dient der Anlageschenkel 11, der in Richtung zu dem Ausleger 1 von der Platte 5 abragt. Neben den vorgenannten Eigenschaften der Anlageschenkel 10, 11 dienen diese ebenfalls zum Gewährleisten eines verdrehsicheren Anschließens des Auslegers 1 an dem Trageprofil 2.

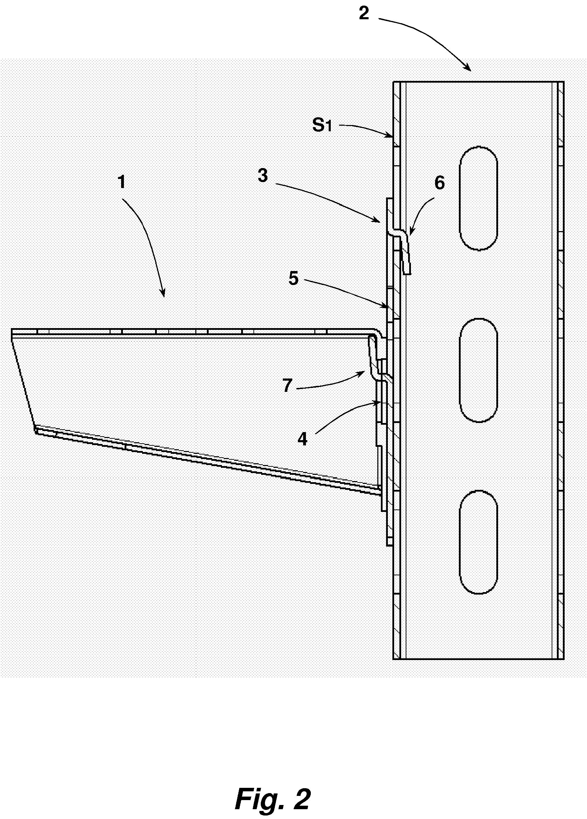

Die Darstellung der Figur 2, die in der die drei Elemente - Ausleger 1, Trageprofil 2 und Adapter 3 - in ihrer montierten Stellung gezeigt sind, macht deutlich, dass die Hakenelemente 6, 7 des Adapters 3 gegenüber der Ebene der Platte 5 schräg gestellt sind, und zwar dergestalt, dass die durch die Hakenelemente 6, 7 jeweils gebildete Aufnahme in Richtung zum Anschluss desselben an die Platte 5 verjüngt ist. Dieses hat einen gewissen Klemmeffekt in der montierten Stellung der einzelnen Elemente zueinander zur Folge. Gut erkennbar ist in dieser Figur auch, dass die lichte Weite der Hakenelemente 6, 7 an die jeweilige Materialstärke des einzuhängenden Gegenstandes angepasst ist. Somit ist die lichte Weite des Hakenelementes 6 an die Materialstärke des Schenkels S₁ des Trageprofils 2 und die lichte Weite des Hakenelementes 7 an die Materialstärke der Stirnplatte 4 des Auslegers 1 angepasst.

Die Platte 5 des Adapters 3 dient aufgrund der flächigen Anlage an dem Schenkel S₁ des Trageprofils 2 zum einen in einer Verdrehsicherung und zum anderen zum Verteilen der über den Ausleger 1 einwirkenden Querkraft.

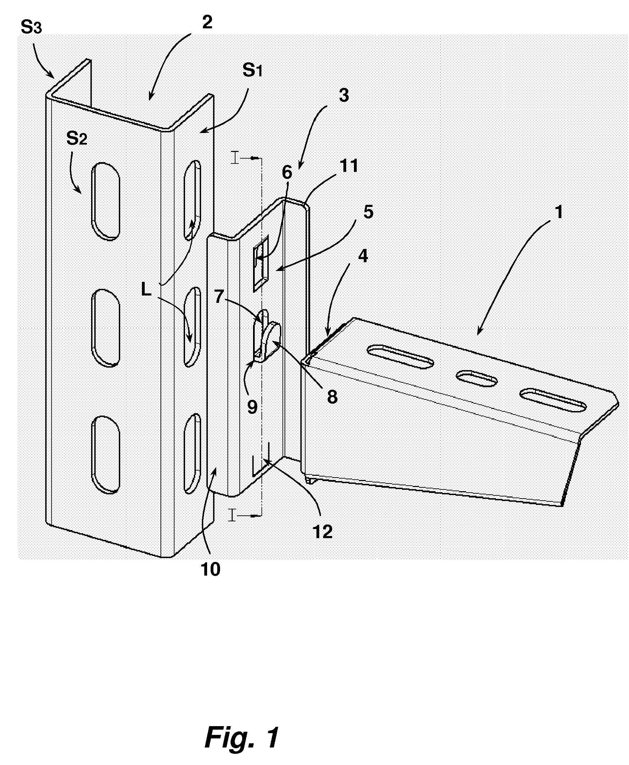

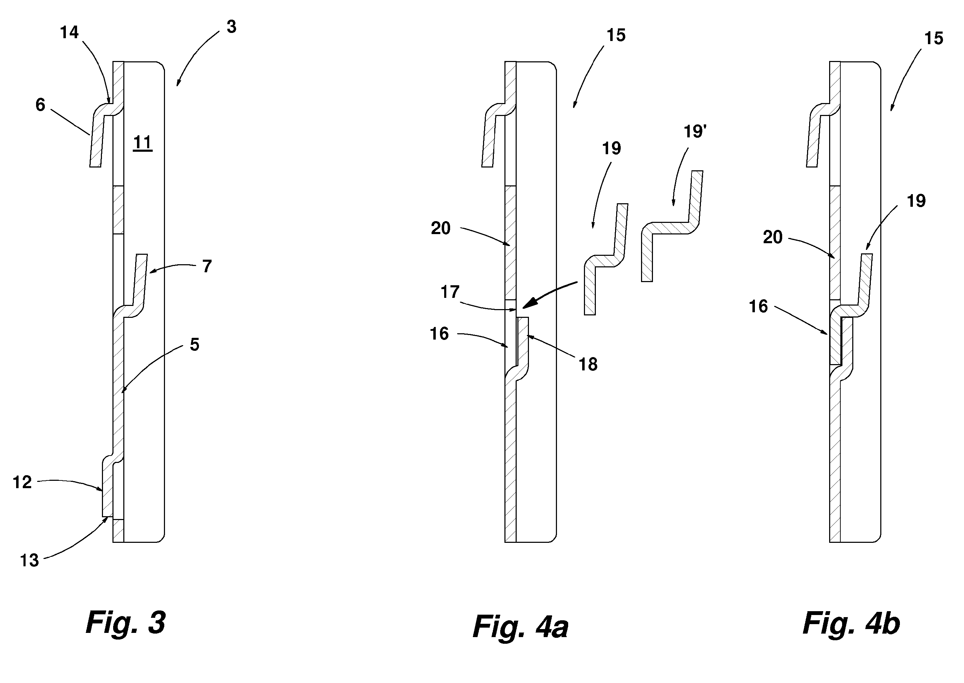

Figur 3 zeigt einen Querschnitt entlang der Linie I-I der Figur 1 durch den Adapter 3. Die Längsschnittdarstellung der Figur 3 durch den Adapter 2 zeigt, dass der Adapter 3 im Bereich seines unteren Endes eine weitere, in Richtung zum dem Schenkel S₁ des Trageprofils 2 weisende Ausklinkung 12 aufweist. Die Ausklinkung 12 ist ebenfalls in der perspektivischen Ansicht der Figur 1 erkennbar. Die Ausklinkung 12 ist um die Materialstärke der Platte 5 des Adapters 3 ausgestellt. Die Ausklinkung 12 dient dem Zweck, dass diese mit ihrer unteren Stirnkante 13 bei an dem Trageprofil 2 eingehängten Adapter 5 sich an der unteren randlichen Begrenzung eines Langloches L des Trageprofils 2 abstützt. Dabei kann vorgesehen sein, dass der untere Rand 13 der Ausklinkung 12 gerade verlaufend vorgesehen ist, wie dieses in Figur 1 dargestellt ist. Dann stützt sich die Ausklinkung 12 mit ihren Ecken an dem U-förmigen Abschluss eines Langloches L des Trageprofils 2 ab. Gleichermaßen kann vorgesehen sein, dass die Ausklinkung 12 bezüglich der Formgestaltung ihres unteren Abschlusses an die Kontur des unteren Endes eines Langloches L angepasst ist. Der Abstand der zur Abstützung der Ausklinkung 12 dienenden Fläche - hier der unteren Stirnfläche 13 - von dem in das Trageprofil einzuhängende Hakenelement 6 ist so bemessen, dass bei an dem Trageprofil 2 angehängtem Adapter 3 das Hakenelement 6 den unteren Randbereich eines Langloches L des Trageprofils 2 hintergreift und mit seinem Steg 14 auf dem unteren Abschluss eines Langloches L aufliegt, während gleichzeitig die Stirnseite 13 ebenfalls auf dem unteren Abschluss eines weiteren Langloches aufliegt. Eine Krafteinleitung in das Trageprofil 2 erfolgt dann nicht lediglich über das Hakenelement 6 bzw. seinen Steg 14 in das Trageprofil 2, sondern auch über die Ausklinkung 12.

Figur 4a zeigt einen weiteren Adapter 15, der prinzipiell aufgebaut ist wie der Adapter 3 der Figuren 1 - 3. Im Unterschied zu dem Adapter 3 verfügt der Adapter 15 über ein von diesem lösbares Hakenelement zum Anschließen des Auslegers 1. Zu diesem Zweck verfügt der Adapter 15 über eine Tasche 16, die an der von dem Trageprofil wegweisenden Seite einen Einsteckschlitz 17 aufweist. Die Tasche 16 ist gebildet durch eine Einprägung 18, die in Richtung zur Seite des anzuschließenden Auslegers 1 ausgeführt ist. Das lösbare Hakenelement ist in diesen Figuren mit dem Bezugszeichen 19 gekennzeichnet. 19' zeigt ein weiteres Hakenelement zum Einsetzen in die Tasche 16 des Adapters 15. Die beiden Hakenelemente 19, 19' unterscheiden sich durch die Verkröpfungsweite.

Gehalten ist eines der beiden Hakelemente 19 oder 19' in der Tasche 16, wenn der Adapter 15 an das Trageprofil 2 angehängt ist. Dann ist die Tasche 16 rückseitig durch das Trageprofil verschlossen. Je nach dem, welches Hakenelement 19 oder 19' verwendet wird, ist die lichte Weite der durch das Hakenelement 19 mit der Platte 20 des Adapters 15 gebildeten Öffnungsweite unterschiedlich. Diese Weite ist vorzugsweise angepasst an die Materialstärke der Stirnplatte des Auslegers. In Abhängigkeit von der Stärke der Stirnplatte des an den Adapter 15 anzuschließenden Auslegers wird ein Hakenelement mit einem kleineren oder mit einem größeren Verkröpfungsbetrag zu dem Adapter 15 verwendet.

Das in den Figuren 4a und 4b gezeigte Ausführungsbeispiel kann ebenfalls mit einer zusätzlichen Abstützausklinkung ausgerüstet sein, wie diese mit dem Bezugszeichen 12 mit dem Adapter 3 beschrieben ist.

### Bezugszeichenliste

- 1: Ausleger
- 2: Trageprofil
- 3: Adapter
- 4: Stirnplatte
- 5: Platte
- 6: Hakenelement
- 7: Hakenelement
- 8: Schenkel
- 9: Steg
- 10: Anlageschenkel
- 11: Anlageschenkel
- 12: Ausklinkung
- 13: Stirnfläche
- 14: Steg
- 15: Adapter
- 16: Tasche
- 17: Schlitz
- 18: Einprägung
- 19, 19': Hakenelement
- 20: Platte

- L: Langloch
- S₁: Schenkel
- S₂: Schenkel
- S₃: Schenkel

## Patentansprüche

1. Adapter zum Anschließen eines Auslegers (1) zur Auflage von Kabelrinnen oder Kabelleitern an ein Trageprofil (2), welches Trageprofil (2) in regelmäßigen Abständen Langlöcher (L) und der Ausleger (1) stirnseitig an seiner zu dem Trageprofil (2) weisenden Seite eine Stirnplatte (4) mit einer Durchbrechung aufweist, welcher Adapter (3, 15) über eine an dem Trageprofil (2) mittels zumindest einem Hakenelement (6) einhakbare Platte (5, 20) verfügt, **dadurch gekennzeichnet, dass** der Platte (5, 20) des Adapters (3, 15) ein von seiner zum Trageprofil (2) wegweisenden Seite ausgestelltes Hakenelement (7, 19, 19') zugeordnet ist, das zum Anschließen des Auslegers (1) an den Adapter (3, 5) in die Durchbrechung der Stirnplatte (4) des Auslegers (1) eingreift.

2. Adapter nach Anspruch 1, **dadurch gekennzeichnet, dass** die Hakenelemente (6, 7) der Platte (5) durch aus der Ebene der Platte (5) ausgestellte Ausklinkungen gebildet sind.

3. Adapter nach Anspruch 1, **dadurch gekennzeichnet, dass** das oder die zum Einhaken des Adapters (15) an das Trageprofil (2) dienenden Hakenelemente durch aus der Ebene der Platte (5) ausgestellte Ausklinkungen gebildet sind und das Hakenelement (19, 19') zum Anschließen des Auslegers (1) eine Z-förmige verkröpfte Lasche und die Platte (20) des Adapters (15) einer zum Einsetzen eines Schenkels dieses Hakenelementes (19, 19') offene Tasche (16) aufweist.

4. Adapter nach Anspruch 3, **dadurch gekennzeichnet, dass** die Tasche (16) des Adapters (15) durch eine in die Platte (20) eingebrachte Einprägung mit einem in Benutzungsstellung des Adapters oben liegenden Einsteckschlitz (17) gebildet ist.

5. Adapter nach einem der Ansprüche 1 bis 4, **dadurch gekennzeichnet, dass** die Ebene der hintergreifenden Abschnitte der Hakenelemente (6, 7; 19, 19') gegenüber der Plattenebene geringfügig nach außen schräg gestellt sind.

6. Adapter nach einem der Ansprüche 1 bis 5, **dadurch gekennzeichnet, dass** an der Platte (5, 20) des Adapters (3, 15) an einer sich parallel zur Längserstreckung des Trageprofils (2) angeordneten Seite ein Anlageschenkel (10) zur Anlage an einer Schenkel (S₂) des Trageprofils (2) angeformt ist.

7. Adapter nach einem der Ansprüche 1 bis 6, **dadurch gekennzeichnet, dass** an der Platte (5, 20) des Adapters (3, 15) an einer sich parallel zur Stirnplatte (4) des Auslegers (1) erstreckenden Seite ein Anlageschenkel (11) zur Anlage an der Seite des Auslegers (1) angeformt ist.

8. Adapter nach einem der Ansprüche 1 bis 7, **dadurch gekennzeichnet, dass** der Adapter ein Hakenelement (6) zum Einhaken desselben an dem Trageprofil (2) aufweist und dieses Hakenelement (6) in der Benutzungsstellung des Adapters (3, 15) mit Abstand und oberhalb zu dem Hakenelement (7; 19, 19') zum Anschließen des Auslegers (1) angeordnet ist.

9. Adapter nach einem der Ansprüche 1 bis 8, **dadurch gekennzeichnet, dass** der Adapter (3) mit Abstand zusätzlich zu dem oder den zum Einhaken desselben an dem Trageprofil (2) dienenden Hakenelementen (6) eine in Richtung zum Trageprofil (2) ausgestellte Ausklinkung (12) aufweist, die sich mit ihrer ausgestellten Stirnfläche (13) zumindest Abschnittsweise an der Wandung eines Langloches (L) des Trageprofils (2) bei an dem Trageprofil (2) angeschlossenen Adapter (3) abstützt.

10. Teilezusammenstellung zum Ausbilden einer Trageeinrichtung für Kabelrinnen oder Kabelleiter umfassend mehrere Adapter, ausgebildet nach einem der Ansprüche 1 bis 9, ein oder mehrere Trageprofile mit in regelmäßigen Abständen angeordneten Langlöchern und mehreren Auslegern mit jeweils einer eine Durchbrechung aufweisenden Stirnplatte, **gekennzeichnet durch**
- Ausleger mit einer unterschiedlichen Materialstärke der Stirnplatten und
- Adapter mit an die unterschiedliche Dicke der Stirnplatten jeweils angepassten Hakenelementen
*oder*
Adapter, die nach Anspruch 3 oder 4 ausgebildet sind und bei denen die Z-förmige Verkröpfung der in die Taschen einsetzbaren Hakenelemente eine an die Materialstärke der Stirnplatte der Ausleger angepassten Verkröpfungsweite aufweisen und die Teilezusammenstellung Hakenelemente mit einer unterschiedlichen Verkröpfungsweite umfasst.

11. Teilezusammenstellung nach Anspruch 10, **dadurch gekennzeichnet, dass** das oder die Trageprofile Stielprofile mit einer U-förmigen Querschnittsfläche sind.
